# EUROPÄISCHE PATENTANMELDUNG

(11) **EP 0 589 165 A2**
(43) Veröffentlichungstag der Anmeldung: **30.03.1994**
(21) Anmeldenummer: 93111405.2
(22) Anmeldetag: 15.07.1993
(51) Int. Cl.: C04B 28/26

(54) **Werkstoff für dämm- oder feuerhemmenden Einsatz**

(30) Priorität: 23.09.1992 DE 4231838
(71) Anmelder: SCHWAB-SVEDEX GmbH & Co KG, D-86653 Monheim (DE); Feldhege, Bernd, D-86685 Huisheim (DE); Mader, Heinz B., D-82205 Gilching (DE)
(72) Erfinder: Feldhege, B,. Dr.Ing., D-86685 Huisheim (DE); Mader, B., Ing., D-82205 Gilching (DE)
(74) Vertreter: Leonhard, Frank Reimund, Dipl.-Ing.

(57) **Zusammenfassung**

Ein wie Holz ver- und bearbeitbarer Werkstoff für dämm- und/feuerhemmenden Einsatz, der aus einer Mischung aus Holzasche und Bindemittel besteht. Das Bindemittel selbst besteht im wesentlichen aus einem in der Holzverarbeitung üblichen Leim und einem Klebezusatz. Der Klebezusatz besteht im wesentlichen aus Natronwasserglas, vermischt mit einem geringen Anteil Wasser sowie Kaolin- und/oder Vermiculite-Pulver.

## Beschreibung

Die Erfindung betrifft einen nach der Art von Holz ver- und bearbeitbaren Werkstoff für dämm- und/oder feuerhemmenden Einsatz sowie ein Verfahren zu dessen Herstellung sowie seine Verwendung für einen Preßformling.

In der holzverarbeitenden Industrie muß in der Regel mit einem großen Anteil an nicht verarbeitbaren Holzresten gerechnet werden. Dieser fällt bei der Be- und Verarbeitung an und stammt zu einem erheblichen Anteil auch aus der Zerkleinerung von Ausschußteilen. In vielen Fällen ist man dazu übergegangen, diese Abfälle, ggf. nach entsprechender Zerkleinerung, zu verbrennen, um das Volumen des Abfalls herabzusetzen und gleichzeitig in der Fabrikation benötigte Energie, wie Wärmeenergie oder Strom, zu gewinnen. Die Verbrennungsrückstände müssen entsorgt werden, da sie neben Verbrennungsrückständen von Holz auch andere Verbrennungsrückstände oder nicht verbrannte Anteile enthalten. Die Entsorgung dieser Verbrennungsrückstände ist relativ teuer und stellt einen wesentlichen Teil der Betriebskosten eines Heizkraftwerkes dar.

Es ist **Aufgabe der Erfindung**, eine Möglichkeit aufzuzeigen, um die beschriebenen Verbrennungsrückstände aus der holzverarbeitenden Industrie einer sinnvollen Verwendung zuzuführen, und so das Entsorgungsproblem deutlich zu verringern und aus der Holzasche einen Werkstoff zu machen.

Diese Aufgabe wird durch die Lehre des Anspruchs 1 oder des Anspruchs 8 oder des Anspruches 11 gelöst.

Diese Lehren sind mit "reiner" Holzasche, also einer Asche, die aus nicht verunreinigten Holzabfällen stammt, ebenso in die Praxis umzusetzen, wie mit Aschen, wie sie bei der Verbrennung von unsortierten und vermischten Abfällen in der holzverarbeitenden Industrie anfallen.

Die Mischung läßt sich gut unter Anwendung von Wärme und Druck in Platten oder Formstücke, auch auf dem Wege des Strangpressens (Anspruch 11), verarbeiten, wobei man ein formstabiles, festes und nur in geringem Umfange hygroskopisches Werkstück erhält. Dieses läßt sich in jeder Hinsicht wie ein Werkstück aus Holz bearbeiten und verarbeiten, wobei durch die Möglichkeit des Strangpressen der Vorteil der Erzielung auch komplizierterer Profile, insbesondere auch Hohlprofile, erhalten wird.

Der Werkstoff zeigt gute Schalldämmeigenschaften. Insbesondere erweist er sich in hohem Maße als feuerhemmend, so daß er in nahezu allen gängigen Brandschutzklassen als Werkstoff eingesetzt werden kann.

Obwohl die Mischung bei der Verarbeitung zu einem Werkstück heiß verarbeitet wird, z. B. bei einer Temperatur von über 100°C, hat sich die Verwendung eines üblichen Holzleims als Bestandteil des Bindemittels besonders bewährt (Anspruch 3), insbesondere eines für die Holzverarbeitung üblichen, kalt verarbeitbaren Weißleims. Es hat sich gezeigt, daß dieser Kaltleim bei der Herstellung eine wichtige Funktion übernimmt, nämlich bei dem aus der Mischung hergestellten Werkstück die Formstabilität gewährleistet, bis das Werkstück ausreichend getrocknet ist und seine natürliche Festigkeit erhält. Es hat sich bewährt, bei 100 Teilen Bindemittel einen Anteil an Kaltleim von etwa 30 bis 40 Gewichtsprozent, vorzugsweise etwa 35 Gewichtsprozent einzusetzen (Anspruch 3). Der Rest besteht aus dem Klebezusatz. Der Hauptanteil des Klebezusatzes besteht aus Natronwasserglas und einem geringen Anteil an Wasser (Anspruch 4). Der Anteil an Natronwasserglas an 100 Teilen Klebezusatz liegt zwischen 65 und 75 Gewichtsprozent, vorzugsweise bei etwa 70 Gewichtsprozent, während der Wasseranteil im Bereich von 3 Gewichtstprozent liegt. Der Rest besteht aus einem pulverförmigen Bestandteil aus Kaolin und/oder Vermiculite (Anspruch 5). In der bevorzugten Zusammensetzung des Klebezusatzes werden Kaolin und Vermiculite-Pulver gemeinsam verwendet und dabei etwa im Verhältnis von 2:1 (Anspruch 5).

Als Leime können übliche Industrieleime, insbesondere für wasserfeste Verleimungen geeignete Einkomponentenleime verwendet werden.

Im trockenen Werkstück kommen auf 100 Gewichtsteile des Mischungsanteils "Holzasche" etwa 100 bis 200 Gewichtsanteile, vorzugsweise etwa 180 Gewichtsanteile, an Bindemittel (Anspruch 6).

Die Mischung kann chargenweise zu Platten oder Formkörpern gepreßt werden, die Verfahrenstemperatur liegt zweckmäßigerweise bei über 100°C. Der Preßdruck wird so eingestellt und die Preßform so ausgebildet, daß einerseits die gewünschte Dichte errreicht wird und andererseits der überwiegende Anteil des für die Verarbeitung notwendigen Wassers aus der Mischung ausgepreßt wird. Bei chargenweiser Verarbeitung liegt die Verweilzeit des Formlings in der Presse bei etwa einer Stunde. Beim Strangpressen kann die Verweilzeit kürzer sein. Für die Verarbeitung wird eine Mischung hergestellt, in der zunächst der Mischungsanteil Holzasche gut durchfeuchtet wird (Anspruch 8). Das Verhältnis zwischen trockener Holzasche und Wasser kann zwischen 2:1 bis 3:1, vorzugsweise etwa bei 2,5:1 liegen. Dabei wird von einem Schüttgewicht der Holzasche von etwa 350g pro Liter ausgegangen. Dieses Schüttgewicht kann sich in gewissen Grenzen ändern in Abhängigkeit von dem Anteil an Fremdstoffen in der Holzasche. Die Holzasche wird mit dem Wasser gründlich durchmischt, um eine gleichförmige Feuchtigkeit zu erhalten. Die durchfeuchtete Holzasche wird dann mit dem Bindemittel innig vermischt und anschließend unter Anwendung von Wärme und Druck verpreßt. Der größte Anteil an Wasser wird aus der Mischung beim Verpressen direkt ausgepreßt, kann also aus entsprechenden Durchbrechungen oder Öffnungen der Form auslaufen (Anspruch 9).

Während der weiteren Verweilzeit des Preßlings in der geschlossenen Form kann über die Durchbrechungen ein weiterer Anteil des Wassers verdampfen. Man kann den Formling aus der Presse entnehmen, wenn bei Raumtemperatur der sichtbare Austritt von Wasserdampf beendet ist. Das Werkstück muß aber danach auch weiter noch getrocknet werden bis der Wassergehalt nur noch dem Wert entspricht, wie er sich der atmosphärischen Feuchtigkeit gegenüber normalerweise einstellt. Der dazu notwendige Trocknungsprozeß kann auf verschiedene Weise ausgeführt werden, bevorzugt erfolgt er unter Ausnutzung der vom Verpressen herrührenden Prozeßwärme (Anspruch 10).

Der Werkstoff kann im Strangpreßverfahren zu Profilen verpreßt werden, z. B. zu Tafeln, die in Längsrichtung durchgehende Bohrungen oder Hohlräume aufweisen. Der trockene Werkstoff weist in kompakter Form ein spezifisches Gewicht von etwa 1 auf.

Versuche im Rahmen einer Feuerschutzprüfung haben gezeigt, daß ein Werkstück bei direkter Beflammung bei einer Temperatur von 1000°C oder höher und über eine Dauer von 90 Minuten und mehr praktisch keinerlei Veränderung zeigt und auch nur in geringem Umfange die Wärme durch den Werkstoff hindurch weiterleitet. Es findet dabei kein Abbrand statt, es können allenfalls einige wenige Teile direkt an der Oberfläche verglühen. Da es sich in der Hauptsache um Ascheteilchen handelt, treten bei der direkten Beflammung praktisch keine Gase aus und es entwickelt sich auch kein Qualm. Der Werkstoff eignet sich daher in hervorragender Weise für den Einsatz als feuerhemmendes oder Brandschutzmaterial.

Das Werkstück kann nach seiner Trocknung einseitig oder bevorzugt beidseitig mit einer Schicht aus einem anderen Material versehen werden (Anspruch 7). So können auf die Oberflächen des Werkstückes direkt Holz- Metall- oder Kunststoffschichten durch Siegeln, Kleben, Leimen oder Nieten kraft- oder formschlüssig fest aufgebracht werden. Diese zusätzlichen Schichten schützen den Gegenstand zugleich gegen Kantenausbruch.

Zur Verstärkung der Biege- oder Bruchfestigkeit derart hergestellter Werkstücke besteht die Möglichkeit vor oder nach dem Preßvorgang Einlegematerialien aus Kunststoff, Holz, Metall oder Verbundwerkstoffen in Form von Schichten oder Profilen einzubinden.

Auf diese Weise lassen sich in den holzverarbeitenden Werkstätten anfallende Holzabfälle, gleich welcher Art, nahezu hundertprozentig, nach entsprechender Verbrennung, wiederverwenden. Es hat sich auch gezeigt, daß die gemäß der Erfindung hergestellten Werkstücke erneut wiederverwendet werden können, indem der Werkstoff zerkleinert und mit Wasser gemischt zu einer wiederverarbeitbaren Mischung aufbereitet wird.

## Patentansprüche

1. Nach der Art von Holz ver- und bearbeitbarer **Werkstoff** für Dämm- und/oder feuerhemmenden Einsatz, bestehend aus einer Mischung aus Holzasche und einem Bindemittel, das aus einem in der Holzverarbeitung üblichen Leim und einem Klebezusatz aus Natronwasserglas, Kaolin- und/oder Vermeculite-Pulver und Wasser besteht.

2. Werkstoff nach Anspruch 1, **dadurch gekennzeichnet**, daß die Holzasche ein Rückstand aus der Verbrennung von Holzwerkstoffen und -resten in der holzverarbeitenden Industrie ist, der mindestens 30 % Holzkohle enthält.

3. Werkstoff nach Anspruch 1 oder 2, **dadurch gekennzeichnet,** daß das Bindemittel aus einem Anteil von 30 bis 40 Gewichtsprozent, vorzugsweise etwa 35 Gewichtsprozent an handelsüblichem Leim, und einem Anteil von 60 bis 70 Gewichtsprozent des Klebezusatzes besteht.

4. Werkstoff nach Anspruch 3, **dadurch gekennzeichnet,** daß der Klebezusatz aus 65 bis 75 Gewichtsprozent, vorzugsweise etwa 70 Gewichtsprozent Natronwasserglas, etwa 3 Gewichtsprozent Wasser und dem Rest aus Kaolin und/oder Vermeculite-Pulver besteht.

5. Werkstoff nach Anspruch 4, **dadurch gekennzeichnet**, daß im Klebezusatz sowohl Kaolin- als auch Vermeculite-Pulver vorgesehen sind, vorzugsweise im Gewichtsverhältnis von 2:1.

6. Werkstoff nach einem der Ansprüche 3 bis 5, **dadurch gekennzeichnet**, daß er auf ca. 100 Gewichtsteile (der) Holzasche etwa 100 bis 200 Gewichtsanteile Bindemittel enthält.

7. Werkstoff nach einem der Ansprüche 1-6 in Form eines Preßwerkstücks, **dadurch gekennzeichnet**, daß das Preßwerkstück ein- oder beidseitig mit einer Schicht aus einem anderen Werkstoff, wie Holz, Metall, Kunststoff oder dergleichen fest verbunden, insbesondere verklebt, verleimt oder versiegelt ist.

8. **Verfahren** zum Herstellen eines Werkstoffs nach einem der Ansprüche 1 bis 7, **dadurch gekennzeichnet**, daß die Holzasche (zunächst) mit Wasser gut durchfeuchtet wird; (dann) mit dem Bindemittelanteil innig vermischt wird und der Werkstoff (darauf) unter Erwärmung auf über 100°C verpreßt wird.

9. Verfahren nach Anspruch 8, **dadurch gekennzeichnet**, daß mit dem Verpressen der Mischung der größte Anteil an Wasser aus dem Werkstoff (Preßling) ausgepreßt und er unter Aufrechterhaltung des Preßdruckes abgedampft wird, wobei er insbesondere nach Aufhebung des Preßdruckes getrocknet wird - vorzugsweise unter Ausnutzung von Prozeßwärme.

10. **Verwendung** eines Werkstoffes nach einem der Ansprüche 1-7 für einen Preßform insbesondere Strangpreßformling.
